# FASCICULE DE BREVET EUROPEEN

(11) **EP 1 103 177 B1**
(45) Date de publication et mention de la délivrance du brevet: **07.05.2003**
(21) Numéro de dépôt: 00440310.1
(22) Date de dépôt: 27.11.2000
(51) Int. Cl.: A01G 17/14

(54) **Piquet utilisé pour la fixation de fils de palissage de la vigne**
Pfahl zum Befestigen von Spalierdrähten
Post for fixing espalier wires

(30) Priorité: 25.11.1999 FR 9914833
(43) Date de publication de la demande: 30.05.2001
(73) Titulaire: Perchat, Alain, 51190 Avize (FR)
(72) Inventeur: Perchat, Alain, 51190 Avize (FR)
(74) Mandataire: Rhein, Alain

(56) Documents cités:
- DE-A- 2 039 580
- FR-A- 2 570 575
- US-A- 2 011 716
- US-A- 3 411 754

## Description

La présente invention a pour objet un piquet utilisé pour la fixation de fils de palissage de la vigne, notamment pour des fils dits releveurs.

L'opération de palissage est utilisée pour orienter dans la direction voulue la pousse de la végétation d'une plante telle que la vigne, c'est-à-dire que l'on attache ladite végétation à des fils tendus sur des piquets. Le palissage a notamment pour but d'empêcher la végétation fraîchement poussée de s'étaler dans les routes de vignes, entre deux rangs, ce qui peut entraver le passage des viticulteurs et surtout des engins de traitement.

Un rang de vigne comporte des piquets alignés et régulièrement espacés sur lesquels passent des fils, généralement métalliques, introduits dans des trous pratiqués dans lesdits piquets, ou bien engagés dans des languettes, issues d'emboutissage, qui forment des crochets sur lesdits piquets, lesdits fils étant tendus entre les deux piquets extrêmes appelés piquets de tête par opposition aux piquets intermédiaires appelés piquets de rang.

Un rang de vigne comporte plusieurs fils tendus sur les piquets, et sur lesquels la végétation est attachée lors de l'opération de liage. Par ailleurs, deux fils sont solidarisés côte à côte aux extrémités supérieures des piquets de rang, l'un au moins desdits fils étant apte à être désolidarisé desdits piquets de rang pour ne rester fixé qu'aux piquets de tête et pendre entre ceux-ci. Ce ou ces fils, appelés fils « releveurs » ou fils « balans », sont destinés à enserrer la partie haute de la végétation, la possibilité de désolidariser au moins l'un d'eux des piquets de rang facilitant l'introduction de la végétation entre eux. Après accrochage du ou des fils releveurs aux piquets, leur rapprochement est complété par des moyens de fixation amovibles tels que des agrafes.

Pour permettre le maintien des fils, mobiles ou non, sur les piquets, ceux-ci doivent comporter des moyens de retenue. Les piquets connus à ce jour présentent divers moyens de retenue, qui ne donnent pas entièrement satisfaction.

Ces moyens de retenue pour les fils fixes consistent, pour les plus répandus, soit en des perçages, soit en des languettes réalisées par emboutissage, qui créent chacune un support dans lequel le fil peut être posé, et qui sont aptes à être pliées pour former une boucle autour dudit fil afin de l'emprisonner et éventuellement de le coincer.

Les perçages présentent l'inconvénient d'une mise en place peu aisée puisque les fils doivent être enfilés et tirés au travers de chacun d'eux, contrairement aux languettes qui permettent de dérouler préalablement le fil, puis de le déposer dans les languettes avant de refermer celles-ci.

Toutefois lorsqu'il s'agit de remplacer les fils fixes, les languettes repliées présentent le même inconvénient que les perçages, il est toutefois possible de les détordre, ce qui, outre le surcroît de main d'oeuvre, peut être préjudiciable à leur solidité.

Par ailleurs, les languettes sont réalisées par emboutissage, en sorte que leur création génère des lumières dans le corps du piquet, aussi, lors du repliement des languettes sur les fils, celles-ci ne sont pas limitées en déplacement, en sorte qu'elles peuvent pénétrer dans lesdites lumière ce qui a pour conséquence de pincer le fil empêchant ainsi toute tension ultérieure de celui-ci, et éventuellement une amorce de cisaillement préjudiciable à sa résistance et sa longévité.

Lors des opérations de palissage, il est parfois nécessaire de remonter les fils releveurs une première fois et de laisser la végétation pousser, puis de remonter les fils une seconde fois, un peu plus haut. Dans ce cas, les fils doivent être maintenus avec possibilité de décrochage rapide pour éviter une perte de temps.

Sur la plupart des piquets utilisés actuellement, les fils ne peuvent pas être maintenus et bloqués, et on utilise dans ce but des agrafes posées sur les fils à proximité des piquets, ce qui occasionne une perte de temps pénalisante du point de vue rentabilité.

Pour pallier ces différents inconvénients, on a proposé des piquets comportant des moyens de retenue permettant l'accrochage et le décrochage d'un fil alors que les deux extrémités de celui-ci sont maintenues fixement.

De tels piquets sont décrits dans les documents DE 20 39 580, US 3.411.754 et US 2.011.716, et qui comportent chacun des moyens permettant de retenir de manière réversible un fil, qui se présentent sous la forme de deux éléments faisant saillie du plan vertical contre lequel passe ledit fil, et qui créent longitudinalement un passage apte à accueillir ledit fil, lesdits deux éléments se présentant sous la forme d'au moins deux crochets juxtaposés et disposés tête-bêche

Les piquets proposés dans ces documents présentent cependant des inconvénients empêchant leur utilisation pour l'immobilisation de façon aisément réversible d'un fil mobile tel que ceux utilisés pour le palissage, notamment de la vigne.

En effet, les piquets décrits dans ces documents nécessitent, pour la pose ou la dépose du fil, de faire subir à ce dernier pour l'engager ou le désengager des deux crochets tête-bêche, une forte inclinaison par rapport à l'horizontale sur une courte distance au risque de créer deux plis. Pour éviter cet inconvénient il est parfaitement possible soit d'éloigner au maximum les deux crochets comme c'est le cas des moyens de retenue décrits dans le document US 3.411.754 qui sont d'un encombrement important, soit de réaliser un grand relâchement de la tension exercée sur le fil, ce qui constitue un surcroît de travail et peut être préjudiciable à l'intégrité du fil.

Par ailleurs, en ce qui concerne le document DE 20 39 580, la manière dont sont formés les deux éléments de retenue, ne peut qu'entraîner la nécessité de plier légèrement le fil ce qui est préjudiciable à sa tenue dans le temps sachant que dans la grande majorité des cas les fils sont métalliques. D'autre part, le fil est maintenu en étant déformé et contraint ce qui est, à la longue, également dommageable pour ledit fil.

Il en est de même pour le piquet décrit dans le document US 2.011.716, puisqu'il y a également nécessité de faire subir au fil d'importantes contorsions préjudiciables à son intégrité.

On connaît également, par le document FR 2.570.575, un piquet présentant des moyens analogues à ceux des documents précédemment évoqués, et qui consistent en une languette formant crochet associée à une saillie disposée à côté de ladite languette, apte à verrouiller le fil engagé dans ledit crochet.

Ce piquet permet de maintenir un fil, éventuellement de manière réversible, il nécessite toutefois pour la mise en place ou l'enlèvement dudit fil d'incliner ce dernier de telle manière que cela ne peut être fait qu'après relâchement de la tension.

D'autre part, tels qu'ils sont présentés, les moyens de maintien d'un fil ne permettent pas d'immobiliser parfaitement ce dernier.

Tous les piquets décrits dans les documents précités présentent en outre un grand inconvénient, celui de nécessiter, pour la mise en place du fil sur un piquet, d'incliner le fil dans un plan vertical, ce qui implique notamment que l'opérateur se place face au piquet.

La présente invention a pour but de proposer un piquet utilisé pour la fixation de fils de palissage de la vigne permettant de remédier aux divers inconvénients précités.

Le piquet utilisé pour la fixation de fils de palissage de la vigne, notamment pour des fils dits releveurs, selon l'invention est du type comportant au moins un moyen de retenue permettant de retenir de manière réversible un fil, et qui se présente sous la forme d'au moins deux éléments juxtaposés faisant saillie du plan vertical contre lequel passe ledit fil et qui, en association, créent un passage apte à accueillir et à retenir ledit fil, lesdits éléments consistent pour l'un en une languette dont une partie s'étend à une certaine distance du plan contre lequel passe le fil, sensiblement parallèlement audit plan et qui est destinée à supporter ledit fil, et pour l'autre en un bossage disposé à côté et à courte distance de ladite languette, et dont l'épaisseur est choisie en sorte d'une part qu'elle soit inférieure à l'écartement de ladite languette par rapport audit plan, et d'autre part que la différence de longueur entre ladite épaisseur et ledit écartement soit sensiblement inférieure au diamètre dudit fil, et il se caractérise essentiellement en ce que le bord supérieur dudit bossage est à un niveau inférieur, dans le sens de la hauteur, à celui de l'extrémité supérieure de ladite languette.

Avec un piquet selon l'invention, l'introduction du fil dans le moyen de retenue, ou son extraction, est réalisée en inclinant le fil dans un plan horizontal.

En effet, lors de la mise en place du fil, on fait lui fait prendre appui sur la face interne de la languette pour lui faire franchir l'obstacle du bossage, ce qui peut, de manière avantageuse du point de vue ergonomique, être réalisé d'une seule main et sans avoir à faire face au piquet.

Selon une caractéristique additionnelle du piquet selon l'invention, les deux éléments juxtaposés sont réalisés par emboutissage.

Selon une autre caractéristique additionnelle du piquet selon l'invention, le bossage présente un bord inférieur sensiblement perpendiculaire au plan duquel il fait saillie.

Selon une autre caractéristique additionnelle du piquet selon l'invention, le bord supérieur du bossage est chanfreiné.

Selon un mode de réalisation particulier du piquet selon l'invention, le bossage consiste en une pastille ronde et de profil bombé.

Le piquet selon l'invention est de préférence prévu pour la fixation de fils dits releveurs, mais il peut également être utilisé pour des fils fixes.

Selon une caractéristique additionnelle du mode de réalisation particulier du piquet selon l'invention, la languette présente une zone de moindre résistance facilitant son pliage.

Selon une caractéristique additionnelle du mode de réalisation particulier du piquet selon l'invention, la languette présente une extrémité libre élargie.

Selon un mode de réalisation particulier du piquet selon l'invention, les moyens de retenue sont solidaires d'une plaque apte à être solidarisée au corps du piquet.

Les avantages et les caractéristiques du dispositif selon l'invention, ressortiront plus clairement de la description qui suit et qui se rapporte au dessin annexé, lequel en représente plusieurs modes de réalisation non limitatifs.

Dans le dessin annexé :
La figure 1 représente une vue schématique partielle de profil d'un premier mode de réalisation du piquet selon l'invention.
La figure 2 représente une vue schématique partielle de face du même piquet.
La figure 3 représente une vue schématique partielle de profil d'un second mode de réalisation du piquet selon l'invention.
La figure 4 représente une vue schématique partielle de face du même piquet.

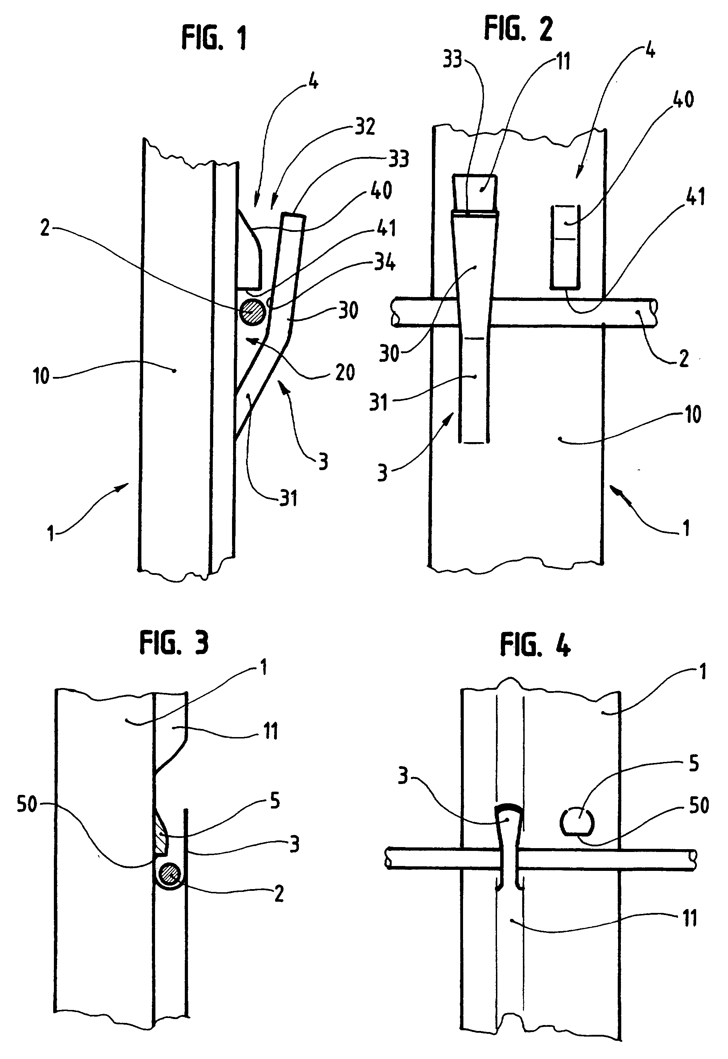

En référence aux figures 1 et 2, on peut voir un piquet 1 selon l'invention, et plus particulièrement un moyen de retenue d'un fil 2.

Le moyen de retenue comprend deux éléments juxtaposés et disposés à une certaine distance l'un de l'autre, en l'occurrence une languette 3 et un bossage 4 réalisés par emboutissage.

Le piquet 1 consiste de préférence, de manière connue, en un profilé de section en L, en U ou en T, et la languette 3 et le bossage 4 font saillie extérieurement d'une aile pour une cornière en L, d'une ou des deux ailes d'un profilé en U, ou de l'aile transversale pour un profilé en T.

La languette 3 présente une partie 30 qui s'étend vers le haut à partir d'un pied 31 qui la rattache au corps 10 du piquet 1. De manière non limitative, la partie 30 s'écarte angulairement du plan vertical duquel elle fait saillie, de manière à évaser l'ouverture 32 du support qu'elle crée et qui est destiné à recevoir le fil 2, comme cela est visible sur la figure 1.

Comme on peut le voir sur la figure 2, la languette 3 et le bossage 4 sont séparés transversalement d'une certaine distance, c'est-à-dire qu'ils sont chacun proche de l'un des bords de l'aile de laquelle ils font saillie.

Le bossage 4 est disposé à un certain niveau, dans le sens vertical, par rapport à la languette 3, il est en effet disposé en regard de l'ouverture 32 de celle-ci, de manière que vu dans l'axe du fil 2, tel que cela est représenté sur la figure 1, il ferme partiellement cette ouverture 32, en ne ménageant qu'un passage 20 apte à accueillir le fil 2.

Par ailleurs, l'épaisseur du bossage 4 est inférieure à la distance qui sépare la partie 30 du corps 10, et la différence entre cette distance et cette épaisseur est inférieure au diamètre du fil 2.

D'autre part, le bord supérieur 40 du bossage 4 est à un niveau inférieur à celui de l'extrémité libre 33 de la languette 3, en sorte que celle-ci déborde vers le haut.

On comprend aisément que la mise en place du fil 2 et son blocage nécessitent d'engager le fil 2 derrière la languette 3 dans un premier temps, puis sous le bossage 4 en orientant le fil 2 dans une direction autre que celle qu'il doit avoir lorsqu'il est tendu notamment en l'inclinant dans un plan horizontal pour contourner le bossage 4 tout en prenant appui contre la face interne 34 de la partie 30 de la languette 3. On comprendra également que lorsque le fil 2 est en place dans le passage 20 et qu'il est sous tension, il ne peut pas s'en échapper, sauf à reproduire de manière inverse l'opération précédemment décrite.

On notera qu'afin de faciliter l'engagement du fil 2, le bord supérieur 40 du bossage 4 est chanfreiné, tandis que pour accroître son blocage dans le passage 20, le bord inférieur 41 du bossage 4 est sensiblement perpendiculaire à l'aile duquel ce dernier fait saillie.

Le moyen de retenue comprenant la languette 3 et le bossage 4, est d'une utilisation aisée et permet de maintenir fermement un fil 2. Par ailleurs, il est tout à fait possible de décrocher un fil 2 engagé dans le moyen de retenue, même si le fil 2 est tendu, aussi, le moyen de retenue peut non seulement être utilisé pour des fils fixes, mais également pour des fils releveurs.

D'autre part, pour accroître le maintien des fils fixes, il est possible, comme pour les languettes des piquets existants, de replier les languettes 3 vers le corps 10 du piquet 1, et afin d'éviter la pénétration de la languette dans la lumière 11, visible partiellement sur la figure 1, issue de la réalisation de la languette 3 par emboutissage, l'extrémité 33 de la partie 30 de la languette 3 est élargie. En effet, du fait de la réalisation du pied 31, il s'opère un décalage dans le sens vertical de la languette 3 par rapport à son empreinte 11, en sorte que lors du repliement il ne peut y avoir concordance des formes.

Bien entendu, il est possible de donner à la languette 3 d'autres formes que celle représentée, laquelle demeure toutefois l'une des plus facile à réaliser.

La languette 3 peut également présenter la forme d'un diabolo, elle comporte ainsi une extrémité libre élargie mais également une partie médiane plus étroite qui réduit sa résistance et la prédispose au pliage en un endroit prédéterminé.

En référence maintenant aux figures 3 et 4, on peut voir que dans un second mode de réalisation, la languette 3 demeure identique si ce n'est que la partie 30 est parallèle au corps 10 du piquet 1, tandis que le bossage consiste en une pastille 5 de forme bombée et présentant dans sa partie inférieure un méplat 50 apte à assurer un verrouillage accru du fil.

On notera que dans ce mode de réalisation, qui en l'occurrence est appliqué à un piquet 1 consistant en un profilé de section en U, la languette 3 est réalisée par le découpage partiel d'une nervure longitudinale de section en U.

Selon une variante non représentée du piquet selon l'invention, les moyens de retenue, à savoir la languette 3 et le bossage 4 ou 5, font saillie d'une plaque destinée à être solidarisée à un piquet tel qu'un piquet en bois. Une telle plaque peut être de forme allongée et comporter plusieurs de ces moyens de retenue, répartis sur toute sa longueur et donc aptes à être répartis sur la hauteur du piquet.

## Revendications

1. Piquet utilisé pour la fixation de fils de palissage de la vigne, notamment pour des fils dits releveurs, du type comportant au moins un moyen de retenue permettant de retenir de manière réversible un fil (2), et qui se présente sous la forme d'au moins deux éléments juxtaposés (3, 4 ; 5) faisant saillie du plan vertical contre lequel passe ledit fil et qui, en association, créent un passage apte à accueillir ledit fil, lesdits éléments consistent pour l'un en une languette (3) dont une partie (30) s'étend à une certaine distance du plan contre lequel passe le fil (2), sensiblement parallèlement audit plan et qui constitue un support audit fil (2), et pour l'autre en un bossage (4 ; 5) disposé latéralement à proximité de ladite languette (3) et en regard de l'ouverture de celle-ci, et dont l'épaisseur est choisie en sorte d'une part qu'elle soit inférieure à l'écartement de ladite languette (3) par rapport audit plan, et d'autre part que la différence de longueur entre ladite épaisseur et ledit écartement soit sensiblement inférieure au diamètre dudit fil (2), **caractérisé en ce que** le bord supérieur (40) dudit bossage (4 ; 5) est à un niveau inférieur, dans le sens de la hauteur, à celui de l'extrémité supérieure (33) de ladite languette (3).

2. Piquet selon la revendication 1, **caractérisé en ce que** le bossage (4 ; 5) présente un bord inférieur (41 ; 50) sensiblement perpendiculaire au plan duquel il fait saillie.

3. Piquet selon la revendication 1 ou la revendication 2, **caractérisé en ce que** le bord supérieur (40) du bossage (4) est chanfreiné.

4. Piquet selon l'une quelconque des revendications précédentes, **caractérisé en ce que** les deux éléments juxtaposés (3, 4) sont réalisés par emboutissage.

5. Piquet selon l'une quelconque des revendications 1 à 3, **caractérisé en ce que** le bossage consiste en une pastille (5) ronde et de profil bombé.

6. Piquet selon l'une quelconque des revendications précédentes, **caractérisé en ce que** la languette (3) présente une zone de moindre résistance facilitant son pliage.

7. Piquet selon l'une quelconque des revendications précédentes, **caractérisé en ce que** la languette (3) présente une extrémité libre (33) élargie.

8. Piquet selon l'une quelconque des revendications précédentes, **caractérisé en ce que** les moyens de retenue sont solidaires d'une plaque apte à être solidarisée au corps du piquet.

## Claims

1. Post used for fixing vine espalier wires, namely the so-called lifting wires, of the type including at least retaining means allowing reversibly retaining a wire (2), and which is in the form of at least two juxtaposed members (3, 4 ; 5) protruding out of the vertical plane against which passes said wire and which, in association, create a passageway capable of accommodating said wire, one of said members consisting of a tongue (3) a portion (30) of which extends at a distance from the plane against which passes the wire (2), substantially parallel to said plane and which forms a support for said wire (2), and the other one of which consists of a boss (4 ; 5) arranged laterally, in the vicinity of said tongue (3) and in front of the opening of same, and the thickness of which is so chosen that, on the one hand, it is smaller than the distance of said tongue (3) with respect to said plane and, on the other hand, the difference in length between said thickness and said distance is substantially smaller than the diameter of said wire (2), **characterised in that** the upper edge (40) of said boss (4 ; 5) is situated at a level, in the height direction, lower than that of the upper end (33) of said tongue (3).

2. Post according to claim 1, **characterised in that** the boss (4 ; 5) has a lower edge (41; 50) substantially perpendicular to the plane out of which it protrudes.

3. Post according to claim 1 or claim 2, **characterised in that** the upper edge (40) of the boss (4) is bevelled.

4. Post according to any of the preceding claims, **characterised in that** the two juxtaposed members (3, 4) are made by deep-drawing.

5. Post according to any of claims 1 to 3, **characterised in that** the boss consists of a round disc (5) having a bulging profile.

6. Post according to any of the preceding claims, **characterised in that** the tongue (3) has an area having a lower strength facilitating its bending.

7. Post according to any of the preceding claims, **characterised in that** the tongue (3) has a widened free end (33).

8. Post according to any of the preceding claims, **characterised in that** the retaining means are integral with a plate capable of being made integral with the body of the post.

## Patentansprüche

1. Pfahl, der für die Befestigung von Drähten zum Anpfählen von Weinstock benutzt wird, nämlich für die Drähte, die aufhebend genannt werden, der Art umfassend wenigstens ein Mittel zum Halten, erlaubend, einen Draht (2) umkehrbar zurückzuhalten, und der als wenigstens zwei nebeneinandergestellte Elemente (3, 4 ; 5) ausgestaltet ist, die vor der vertikalen Ebene vorspringen, gegen welche der besagte Draht verläuft, und die gemeinsam einen Durchgang schaffen, der geeignet ist, den besagten Draht aufzunehmen, wobei das eine von den besagten Elementen aus einem Zünglein (3), dessen Teil (30) sich in einem gewissen Abstand von der besagten Ebene ausdehnt, gegen welche der Draht (2) verläuft, im wesentlichen parallel zu der besagten Ebene, und der einen Träger des besagten Drahts (2) darstellt, und das andere aus einem Buckel (4 ; 5) besteht, der seitlich in der Nähe des besagten Züngleins (3) und der Öffnung desselben gegenüberliegend angeordnet ist, und dessen Dicke derart gewählt ist, daß sie, einerseits, kleiner ist als die Gespreiztheit des besagten Züngleins (3) in Bezug auf die besagte Ebene, und, andererseits, daß der Längenunterschied zwischen der besagten Dicke und der besagten Gespreiztheit im wesentlichen kleiner ist als der Durchmesser des besagten Drahtes (2), **dadurch gekennzeichnet, daß** der obere Rand (40) des besagten Buckels (4 ; 5) in einem niedrigeren Bereich ist, in Richtung auf die Höhe, als jener des oberen Endes (33) des besagten Züngleins (3).

2. Pfahl nach Anspruch 1, **dadurch gekennzeichnet, daß** der Buckel (4 ; 5) einen unteren Rand (41 ; 50) aufweist, merklich senkrecht zu der Ebene, vor der er vorspringt.

3. Pfahl nach Anspruch 1 oder Anspruch 2, **dadurch gekennzeichnet, daß** der obere Rand (40) des Buckels (4) abgeschrägt ist.

4. Pfahl nach irgendeinem der vorgehenden Ansprüche, **dadurch gekennzeichnet, daß** die zwei nebeneinandergestellten Elemente (3, 4) durch Tiefziehen hergestellt sind.

5. Pfahl nach irgendeinem der Ansprüche 1 bis 3, **dadurch gekennzeichnet, daß** der Buckel aus einem runden Plättchen (5) mit konvexem Profil besteht.

6. Pfahl nach irgendeinem der vorgehenden Ansprüche, **dadurch gekennzeichnet, daß** das Zünglein (3) eine Zone geringeren Widerstandes aufweist, die sein Falten erleichtert.

7. Pfahl nach irgendeinem der vorgehenden Ansprüche, **dadurch gekennzeichnet, daß** das Zünglein (3) ein erweitertes freies Ende (33) aufweist.

8. Pfahl nach irgendeiner der vorgehenden Forderungen, **dadurch gekennzeichnet, daß** die Mittel zum Halten fest mit einer Platte verbunden sind, die geeignet ist, fest mit dem Körper des Pfahles verbunden zu werden.
